# EUROPEAN PATENT APPLICATION

(11) **EP 1 236 693 A1**
(43) Date of publication of application: **04.09.2002**
(21) Application number: 01830117.6
(22) Date of filing: 21.02.2001
(51) Int. Cl.: C03C 3/076, C03C 3/089, C03C 3/064, C04B 33/13, C04B 35/16, C03C 10/00

(54) **A material, particularly for artificial stones of ornamental articles, a process for the preparation of this material and artificial stone made using this process**

(71) Applicant: Gemmindustria Gaia Ferrando S.p.A., 20122 Milano (IT)
(72) Inventor: Gaia, Paolo, 20089 Basiglio (IT); Gaia, Piergiovanni, 20145 Milano (IT); Montenero, Angelo Università di Parma, 43100 Parma (IT)
(74) Representative: Petruzziello, Aldo

(57) **Abstract**

A material, particularly for the production of artificial stones, formed by a siliceous based material containing some germanium dioxide GeO₂.

The material of the invention is suitable for the cutting of artificial stones which, compared to those known, have more valuable properties of increased refractive index, greater hardness and the attainment of the desired degree of density.

## Description

The field of the invention is that of artificial stones used for the preparation of articles of jewellery in general (e.g. rings, necklaces, brooches, fashion accessories, etc.), in turn formed starting with metals normally used for these applications (such as gold, silver, titanium and similar).

The known artificial stones are made of glass, crystal or plastic. However, such artificial stones have the drawback of a low refractive index (and hence reduced lustre), limited hardness (so that they are easily damaged and cannot be worked with the polishing effect required for more valuable articles) and insufficient heat resistance, important in producing a stone able to withstand the working process of the metal which holds it. The conventional artificial stones also have the disadvantage of being made heavier, and therefore more valuable, by the addition of lead which, as everyone knows, is a polluting metal and the use of which is gradually being abandoned.

Hence the main aim of the invention is to provide a suitable material for the cutting of artificial stones which, compared to known ones, have more valuable properties of increased refractive index, greater hardness and the attainment of the desired degree of density.

This and other aims are reached with the material, the process and the artificial stone of claims 1, 10 and 11 respectively. Further characteristics of the invention result from the other claims.

Compared to known materials, the one according to the invention offers the advantage of allowing the production of artificial stones with greater lustre and hardness enabling them to be worked as desired, and a heat resistance able to withstand the working process of the metal holding this artificial stone.

According to the invention, the material used for cutting the artificial stones is a siliceous based material, containing germanium dioxide GeO₂. Advantageously, this material also contains some zirconia ZrO₂. Additional components which may be added to the material of the invention, for auxiliary purposes, are TiO₂, Na₂O, Li₂O₃, B₂O₃ and CaO.

For the aims of the invention, germanium dioxide is present in an amount of between 4 and 15% in weight, while zirconia is present in an amount of between 5 and 15% in weight.
According to an first exemplary embodiment, the material of the present invention is made up of:

| | |
|---|---|
| GeO₂ | 15% |
| ZrO₂ | 15% |
| SiO₂ | 60% |
| B₂O₃ | 10% |

Preferably, the material of the invention has the following composition:

| | |
|---|---|
| TiO₂ | 33.5% |
| Na₂O | 6% |
| Li₂O₃ | 6% |
| SiO₂ | 27.375% |
| GeO₂ | 7% |
| B₂O₃ | 3% |
| CaO | 10% |
| ZrO₂ | 7.152% |

The material thus formed has the following values of hardness, density and refractive index:
Vickers hardness: ≥7 GPa, preferably 7.21-7.31 GPa
Density: ≥ 3 g/cm³
Refractive index (measured by laser with a wavelength of 543.5 nm) > 1.50, preferably 1.80.

The following process is used to make this material:

After having weighed the components in powder form and added any dyes, they are quickly heated up to a temperature of 600°C. Afterwards, the mixture is heated more slowly up to approx. 950°C to free CO₂ and then up to 1400°C to achieve complete melting. Having reached this temperature, the mixture is removed from the furnace and stirred with a platinum coated alumina rod, so as to mix thoroughly the various components. At the same time, a die or mould is preheated to 600°C, some release agent is spread on it and the product is poured in. The latter is put in the annealing furnace and is kept at a temperature of 600°C for a time which varies depending on the thickness of the item obtained. At this point the furnace is turned off and is left to cool down to room temperature keeping the furnace door closed. A temperature drop ramp may be required for particularly thick items to achieve slower cooling.

## Claims

1. A material, particularly for the production of artificial stones, **characterised in that** it is a siliceous based material containing some germanium dioxide GeO₂.

2. A material as in claim 1, **characterised in that** said siliceous base contains some titanium oxide.

3. A material as in claim 1, **characterised in that** it also contains some zirconia ZrO₂.

4. A material as in one or more of the previous claims, **characterised in that** it also contains TiO₂, Na₂O, Li₂O₃, B₂O₃ and CaO.

5. A material as in one or more of the previous claims, **characterised in that** it also contains between 4 and 15% in weight of GeO₂.

6. A material as in one or more of the previous claims, **characterised in that** it also contains between 5 and 15% in weight of ZrO₂

7. A material as in one or more of claims 1 to 6, **characterised in that** it is made up of:
| | |
|---|---|
| GeO₂ | 15% |
| ZrO₂ | 15% |
| SiO₂ | 60% |
| B₂O₃ | 10% |

8. A material as in one or more of claims 1 to 6, **characterised in that** it is made up of:
| | |
|---|---|
| TiO₂ | 33.5% |
| Na₂O | 6% |
| Li₂O₃ | 6% |
| SiO₂ | 27.375% |
| GeO₂ | 7% |
| B₂O₃ | 3% |
| CaO | 10% |
| ZrO₂ | 7.152% |

9. A material as in one or more of the previous claims, **characterised in that** it has the following values of hardness, density and refractive index:
Vickers hardness: ≥ 7 GPa, preferably 7.21-7.31 GPa
Density: ≥ 3g/cm³
Refractive index (measured by laser with a wavelength of 543.5 nm) > 1.50, preferably 1.80.

10. A process for the production of the material as in one or more of the previous claims, **characterised in that** it envisages:
a) the rapid heating of the components in powder form up to 600°C;
b) the slower heating of the mixture up to 950°C to free CO₂;
c) the final heating to a temperature of 1400°C to achieve the complete melting of the mixture;
d) the annealing of the mixture in a die at 600°C and the cooling down of the item obtained to room temperature.

11. An artificial stone, **characterised in that** it is obtained with the material and the process as in one or more of the previous claims.

12. An ornamental article, **characterised in that** it is prepared with one or more of the artificial stones of claim 11.
